# EUROPÄISCHE PATENTANMELDUNG

(11) **EP 1 180 755 A1**
(43) Veröffentlichungstag der Anmeldung: **20.02.2002**
(21) Anmeldenummer: 00117854.0
(22) Anmeldetag: 18.08.2000
(51) Int. Cl.: G07F 19/00, G07F 7/08

(54) **Verfahren und Anordnung zur Übertragung eines elektronischen Geldbetrages aus einem Guthabenspeicher**

(71) Anmelder: SIEMENS AKTIENGESELLSCHAFT, 80333 München (DE)
(72) Erfinder: Horn, Michael, 81739 München (DE); Wolf, Hans-Hermann, 81829 München (DE)

(57) **Zusammenfassung**

Verfahren zur Übertragung eines elektronischen Geldbetrages aus einem Guthabenspeicher eines Geldsenders auf ein Konto bzw. in einen Guthabenspeicher eines Geldempfängers über ein Telekommunikations- und Datennetz in Echtzeit.

## Beschreibung

Die Erfindung betrifft ein Verfahren sowie eine Anordnung zur Übertragung eines elektronischen Geldbetrages aus einem Guthabenspeicher auf ein Konto bzw. in einen anderen Guthabenspeicher über ein Telekommunikations- und Datennetz.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet auf die ursprünglich etablierte und heute noch meist verbreitete Weise erfordert die jeweils gesonderte Eingabe der relevanten Datensätze zumindest bei jedem Geschäftspartner, wenn nicht sogar für die einzelne Transaktion. Diese Zahlungsweise gibt damit dem Geschäftspartner Einblick in sensible persönliche Daten und sogar die Möglichkeit ihrer dauerhaften Speicherung.

Auch für die Abwicklung sonstiger Zahlungsvorgänge im geschäftlichen wie im privaten Bereich hat das Internet inzwischen erhebliche Bedeutung erlangt. Nahezu alle Banken in den Industrieländern bieten als "Electronic Banking" die elektronische Abwicklung der Kontoführung und von Zahlungsvorgängen an.

Gleichwohl erfolgt die Mehrzahl der Zahlungsvorgänge des täglichen Lebens auch heute noch per Bargeld oder durch schriftliche Erteilung von Überweisungs- oder Einzugsaufträgen o. ä. oder bei Kredit- bzw. Scheckkarte. Auf speziellen Gebieten, etwa dem der Mobilfunktechnik, haben auch elektronische Guthaben (sog. "Prepaid-Karten") Bedeutung erlangt, einer breiten Einführung dieses Zahlungsmittels stehen aber erhebliche Hindernisse im Wege.

Insgesamt ist festzustellen, daß beim derzeitigen Stand der Entwicklung eine höchst unübersichtliche Vielzahl von Möglichkeiten der Bezahlung von Waren oder Dienstleistungen besteht, deren Handhabung im täglichen Leben erhebliche Aufmerksamkeit und den Umgang mit den verschiedensten Medien bzw. Eingabemodi erfordert. Das ist lästig und zudem mit vielfältigen Sicherheitsrisiken (Verlust von Daten- bzw. Guthabenträgern, Vergessen von Kontendaten bzw. Authentisierungscodes etc.) verbunden.

Neben dem Internet stellt die Telekommunikation - insbesondere die mobile Telekommunikation - heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informationsinstrument und auch zunehmend für den Zugriff auf Waren und Dienstleistungen genutzt. Auch diese Entwicklung wird noch durch unzureichende Möglichkeiten für eine sichere und zugleich einfache Bezahlung von über das Handy bestellten Informationen, Waren und Dienstleistungen behindert.

Zwar gibt es Lösungen, die dem Nutzer eines Handys - mit oder ohne Prepaid-Karte - die Autorisierung von Zahlungen ermöglichen, welche anschließend auf an sich konventielle Weise per Lastschriftverfahren oder Kreditkarten-Abbuchung abgewickelt werden. Diese Verfahren setzen jedoch, wie auch die im Internet inzwischen eingebürgerten Zahlungsabwicklungen, die Kreditwürdigkeit des Käufers und die Verfügungsbefugnis über eine Kreditkarte oder ein Girokonto mit Dispositionskredit voraus. Zudem wohnen diesen Verfahren zeitliche Verschiebungen inne, die sich nachteilig auf die Transparenz und Zuverlässigkeit der Gesamtabwicklung auswirken.

Der Erfindung liegt daher die Aufgabe zugrunde, ein Verfahren und eine Anordnung zur vereinfachten Abwicklung von Zahlungsverkehr unter Nutzung eines Datennetzes anzugeben.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Anordnung mit den Merkmalen des Anspruchs 9.

Die Erfindung schließt den wesentlichen Gedanken ein, ein weitgehend universelles Zahlungsverfahren auf der Grundlage eines elektronischen Guthabens (Prepaid-Konto bzw. -Karte) anzugeben, welches für eine Zahlungsabwicklung im sogenannten B2C(Business-2-Consumer)-Bereich wie auch im C2C(Consumer-2-Consumer)-Bereich anwendbar ist, also sowohl den Einkauf in realen und virtuellen Geschäften, die Bezahlung in gastronomischen oder kulturellen Einrichtungen etc. als auch die "Übersendung" von Geldbeträgen im privaten Bereich ermöglicht. Sie schließt weiter den Gedanken ein, hierzu die Möglichkeiten eines verknüpften Telekommunikations- und Datennetzes zu nutzen, und zwar insbesondere die Möglichkeit einer Abwicklung in Echtzeit (Real Time). Unter einem elektronischen Guthaben wird hier ein Speicherinhalt eines über ein Telekommunikations- bzw. Datennetz zur Durchführung von Zahlungsverkehr handhabbaren Guthabenspeichers verstanden - grundsätzlich unabhängig davon, ob der Speicher tatsächlich ein vorausbezahltes Guthaben aufweist oder ein Guthabenbetrag erst zu einem späteren Zeitpunkt transferiert wird.

Kernstück der vorgeschlagenen Anordnung und des vorgeschlagenen Verfahrens ist ein Transaktions-Server, der auf eine Transaktions-Datenbasis zugreift, in der die für eine Übertragung von Prepaid-Guthaben relevanten Daten gespeichert sind. Initiiert wird der Übertragungsvorgang durch das Auslesen eines Datenträgers bzw. Datenendgerätes, in dem ein für die gezielte Auslösung der Transaktion hinreichender Datensatz des Geldsenders gespeichert ist, mit einem beim Geldempfänger vorhandenen Lesegerät. Dieses steht seinerseits über ein Telekommunikations-Endgerät mit dem Transaktions-Server in Verbindung.

Das vorgeschlagene Verfahren bietet als Echtzeitverfahren eine gegenüber bekannten Zahlungsabwicklungsverfahren verbesserte Transparenz und Zuverlässigkeit und ist insbesondere auch von Personen nutzbar, denen kein Kreditrahmen gewährt wird. Der Nutzer muß lediglich über ein vorausbezahltes Guthaben verfügen, das eine für die vorgesehene Geldübertragung ausreichende Deckung gewährleistet.

In der nachfolgenden Beschreibung und den Patentansprüchen wird der Inhaber des Prepaid-Guthabens, der einen Geldbetrag übertragen möchte und in einem (realen oder virtuellen) Geschäft als Käufer und in einer gastronomischen Einrichtung als Gast in Erscheinung tritt, allgemein als "Geldsender" bezeichnet. Der Empfänger des zu übertragenden Geldbetrages, bei dem es sich im täglichen Leben zumeist um den Inhaber bzw. Betreiber eines Geschäftes oder einer gastronomischen oder kulturellen Einrichtung o. ä. handeln wird, wird nachfolgend allgemein "Geldempfänger" bezeichnet. Geldempfänger und Geldsender können im übrigen auch Applikationen sein.

Jeder Geldempfänger, der die Möglichkeit der Geldübertragung von Prepaid-Guthaben eines Partners auf sein eigenes Konto nutzen möchte, muß einen die Geldübertragung realisierenden Dienst subskribieren. Mit dem Subskriptionsvorgang wird ein ihn betreffender Datensatz in einer Transaktions-Datenbasis ("Shopping-Datenbank") abgelegt. Das Konto des Geldempfängers muß zur Verwaltung elektronischer Guthaben geeignet sein; es kann sich hierbei insbesondere ebenfalls um ein Prepaid-Konto handeln. Der Geldempfänger kann mehrere Telefonnummern und auch mehrere Zielkonten für die Geldübertragung benutzen, wobei in diesem Fall natürlich alle einzusetzenden Telefonnummern und Konto-Identifikatoren aller Konten in der Shopping-Datenbank zu hinterlegen sind. (Mit dem Begriff "Konto-Identifikator" wird nachfolgend die Gesamtheit aus einer Kontonummer bzw. einem Kontencode und der gegebenenfalls benötigten Server-Adresse eines externen Servers verstanden, auf dem das Konto verwaltet wird.) Neben den erwähnten Daten umfaßt der in der Transaktions-Datenbasis gespeicherte Geldempfänger-Datensatz zweckmäßigerweise auch einen Namen bzw. Firmennamen.

Als hardwaremäßige Voraussetzung für die Nutzung des Dienstes benötigt der Geldempfänger ein Lesegerät für den bei der konkreten Anordnung eingesetzten Datenträger oder das geeignete Datenendgerät des Geldsenders. Es kann sich hierbei um ein an sich bekanntes Kartenlesegerät für Chipkarten oder Magnetstreifenkarten oder auch einfach um eine Schnittstelle zur Übertragung von transaktionsrelevanten Daten aus einem Speicher des erwähnten Datenendgerätes handeln. Es sollte zweckmäßigerweise über eine Ein- und eine Ausgabeeinrichtung zur Eingabe von Zusatzinformationen (etwa Geldbetrag, PIN, ...) bzw. zur Ausgabe von den Transaktionsvorgang betreffenden Informationen bzw. Signalen (Bestätigungs- bzw. Abbruchsignal, Aufforderungen zu bestimmten Eingaben ...) verfügen.

Sofern die konkrete Ausführung der vorgeschlagenen Lösung den Einsatz eines Datenendgerätes seitens des Geldsenders vorsieht, ist dieses bevorzugt zur drahtlosen Nachrichtenübertragung an das (natürlich entsprechend ausgebildete) Lesegerät, insbesondere mittels Infrarot- oder Bluetooth-Übertragung, ausgestattet. Es sind auch Kombinationen von Datenträger und Endgerät in der Hand des Geldsenders möglich - beispielsweise das Vorsehen eines den ersten Geldsender-Datensatz enthaltenden Barcodes (zur Auslesung durch ein Barcode-Lesegerät beim Geldempfänger) auf der Rückseite des im Besitz des Geldsenders befindlichen Endgerätes (Handy, Handheld-PC o. ä.).

Das System beinhaltet in vorteilhafter Weise die Möglichkeit der Zuordnung verschiedener Personen zu einem Prepaid-Guthaben als Geldsender, beispielsweise der Mitglieder einer Familie oder eines Vereins oder der Mitarbeiter einer Firma. Diese werden zweckmäßigerweise über individualisierte Datenträger oder Datenendgeräte verfügen, die jeweils mit den erforderlichen Authentisierungsmitteln ausgestattet sind.

Neben den Informationen zum Geldempfänger enthält die Shopping-Datenbank auch die zur Durchführung der Geldübertragung erforderlichen Informationen bezüglich des Geldsenders. Dieser (zweite) Geldsender-Datensatz enthält zweckmäßigerweise die Prepaid-Telefonnummer, erforderlichenfalls die Server-adresse eines externen Servers, auf dem das Prepaid-Guthaben verwaltet wird (auch hier nachfolgend gelegentlich als "Konto-Identifikator" bezeichnet), vorteilhafterweise auch den Server- und Betreibernamen und schließlich einen Authentisierungsdatensatz zur mindestens optionalen fallweisen Authentisierung größerer Geldtransfers.

Der auf dem Datenträger oder Datenendgerät, das der Geldsender zur Initiierung des Übertragungsvorganges einsetzt, gespeicherte erste Geldsender-Datensatz umfaßt in einer vorteilhaften Ausgestaltung der Erfindung einen Validierungscode (nachfolgend auch bezeichnet als VIN = Validation Number bezeichnet). Hierbei handelt es sich beispielsweise um eine mehrstellige Zufallszahl, die vom Betreiber des entsprechenden Dienstes vergeben wird und die Sicherheit bei der Nutzung des Datenträgers erhöht. Die VIN wird in dem Fall wirksam, daß ein Prepaid-Vertrag ausgelaufen ist und die zugehörige Prepaid-Telefonnummer nach einer gewissen Karenzzeit durch den Betreiber des Dienstes für einen anderen Kontoinhaber (und damit Geldsender) aktiviert wird. Sie sichert für diesen Fall, daß der ursprüngliche Inhaber der Prepaid-Rufnummer den gegebenenfalls bei ihm verbliebenen Datenträger (bzw. den entsprechend geladenen Speicher seines Datenendgerätes) nicht mißbräuchlich weiterhin für Geldübertragungen von einem nicht mehr in seinem Besitz stehenden Guthaben verwenden kann.

Eine weitere wesentliche Sicherheitskomponente stellt der bereits erwähnte Authentisierungsdatensatz im zweiten (in der Transaktions-Datenbasis zugreifbare) Geldsender-Datensatz dar. Dieser umfaßt insbesondere einen Authentisierungscode (PIN o. ä.) und/oder biometrische Daten des Geldsenders (z. B. Papillarlinien- oder Retinamuster), der bzw. die zur fallweisen Autorisierung von Geldübertragungen genutzt werden. Dieser Code bzw. diese Daten werden am Lesegerät selbst oder an einem diesem zugeordneten Eingabegerät eingegeben, über das zugehörige Endgerät zum Transaktions-Server übermittelt und dort mit den entsprechenden hinterlegten Daten verglichen. Im Ergebnis des Vergleiches wird die Transaktion freigegeben oder gesperrt. Beim Einsatz der vorgeschlagenen Lösung in realen Läden, gastronomischen Einrichtungen etc. erfolgt die Eingabe des zu übertragenden Geldbetrages vorzugsweise durch eine mit dem Lesegerät verbundene Kasse, wodurch Eingabefehler und Manipulationen praktisch ausgeschlossen werden.

Die erwähnten Autorisierungsschritte werden in einer bevorzugten Verfahrensdurchführung bei Kleinstbeträgen nicht ausgeführt, sondern nur bei einen vorbestimmten Schwellwert übersteigenden Geldbeträgen. Dieser Schwellwert ist vorteilhafterweise durch den Dienstbetreiber oder den Geldsender selbst einstell- bzw. änderbar.

Die vorgeschlagene Lösung, die sinnbildlich auch als "Prepaid-Shopping-Anwendung" bezeichnet werden kann, umfaßt die Funktionsblöcke (1) Start des Geldübertragungsverfahrens, (2) Abbuchung beim Geldsender und (3) Aufbuchung beim Geldempfänger. Diese Funktionsblöcke können auf ein und demselben oder verschiedenen Servern ablaufen, für den bzw. die zusammenfassend der Begriff "Transaktions-Server" steht. Der oder die Server kann bzw. können zentral bei einem Dienstbetreiber oder in mehreren Hardware-Implementierungen bei diesem oder auch bei mehreren Dienstbetreibern existieren. Die Prepaid-Shopping-Anwendung hat - wie oben bereits erwähnt - Zugriff auf eine "Shopping-Datenbank", die (je nach konkretem Netz- und Anwendungskonzept) ebenfalls zentral an einer Stelle, verteilt an mehreren Stellen oder auch in mehreren Kopien an verschiedenen Stellen vorliegen kann.

Verfahren und Anordnung gestalten sich am einfachsten, wenn das Prepaid-Guthaben des Geldsenders, das Zielkonto des Geldempfängers und die Prepaid-Shopping-Anwendung selbst bei ein und demselben Dienstbetreiber verwaltet bzw. betrieben werden. Ist dies nicht der Fall, muß ein (als solches bekanntes) Clearing über die Geldübertragung stattfinden. Für diesen Vorgang können die beim Ab- und Aufbuchungsvorgang erstellten Dokumentationen, insbesondere als sogenannte Log-Records, eingesetzt werden.

Das vorgeschlagene System erbringt (neben bereits genannten Vorteilen) den wesentlichen Vorteil, daß das auf einem Prepaidkonto vorhandene elektronische Geld nicht nur für die Bezahlung einer eng spezifizierten Dienstleistung (speziell von Telefongesprächen), sondern in vielfältiger Weise für die Bezahlung von Waren, Dienstleistungen, Informationen etc. in realen wie auch in virtuellen Verkaufseinrichtungen aller Art genutzt werden kann. Über die Vorausbezahlung des Guthabens hat der Nutzer eine strenge Kostenkontrolle, und eine unbeabsichtigte Verschuldung ist prinzipiell ausgeschlossen. Damit ist dieses Verfahren besonders vorteilhaft auch für Minderjährige (oder auch für nicht mehr im vollem Besitz ihrer geistigen Kräfte befindliche ältere Menschen) einsetzbar, für die es bislang keine vergleichbare Anwendung gibt. Für die Bezahlung von Waren oder Dienstleistungen verschiedener Anbieter sind nicht länger mehrere Prepaid-Karten oder -Endgeräte erforderlich, sondern nur ein einziger Datenträger, auf dem eine einzige Prepaid-Rufnummer gespeichert ist.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Figur 1 ein stark vereinfachtes Funktions-Blockschaltbild einer Ausführungsform der erfindungsgemäßen Anordnung und
Figur 2 eine schematische Darstellung der wesentlichen Schritte des ersten Funktionsblocks der vorgeschlagenen Anwendung bei der Anordnung nach Fig. 1.

Die Figuren sind im wesentlichen selbsterklärend, wenn beachtet wird, daß die Kürzel S: MSISDN eine Prepaid-Rufnummer des Geldsenders, E: MSISDN die entsprechende Rufnummer des Geldempfängers und VIN den oben erwähnten Validierungscode bezeichnen.

Zur Durchführung der Geldübertragung wird die Prepaid-Rufnummer (speziell Mobilfunknummer) sowie die VIN des Geldsenders aus dessen Datenträger über das Lesegerät eingegeben. Die Prepaid-Rufnummer enthält eine initiale Ziffernfolge, die zur Identifizierung des Geldübertragungsverfahrens dient. Nachdem der Datenträger gelesen wurde, wird daher durch das entsprechende Endgerät eine Datenverbindung zu der Shopping-Datenbank aufgebaut. (Alternativ kann das Anwählen der Shopping-Datenbank nach dem Lesen des Datenträgers auch manuell oder über einen Preselektion-Modus erfolgen.)

Nach Herstellung der Verbindung werden die folgenden Daten zur Shopping-Datenbank übertragen: die Zielkontonummer des Empfängers, der zu übertragende Geldbetrag, die Prepaid-Rufnummer des Geldsenders und die VIN. Ist ein Kassensystem an das Lesegerät angeschlossen, erfolgt die Eingabe des Geldbetrages automatisch über die Kasse, anderenfalls kann der Betrag beispielsweise manuell über eine Tastatur des Lesegerätes eingegeben werden.

Nach Übermittlung der Daten, mit dem das Geldübertragungsverfahren gestartet ist, folgt ein Prüfungsvorgang im Hinblick darauf, ob der Datenträger gültig und der Betrag auf dem Prepaid-Konto des Geldsenders für den vorgesehenen Übertragungsvorgang ausreichend ist. Ist beides der Fall, wird der Geldsender aufgefordert, die Abbuchung des zu übertragenden Geldbetrages durch Eingabe seiner PIN zu autorisieren.

Im Rahmen des Prüfungsvorganges greift die Prepaid-Shopping-Anwendung auf die Shopping-Datenbank zu und liest den Geldempfänger-Datensatz und den (zweiten) Geldsender-Datensatz mit den darin enthaltenden Informationen, auf welchem Server bzw. welchen Servern (und bei welchem Betreiber bzw. welchen Betreibern) sich die Konten des Geldempfängers und Geldsenders befinden. Der Server des Geldsenders wird identifiziert, und es wird - falls es sich um einen anderen Server handelt als denjenigen, auf dem die Prepaid-Shopping-Anwendung läuft, eine Echtzeitverbindung zu einer auf diesem fremden Server laufenden Prepaid-Shopping-Anwendung aufgebaut.

Anschließend wird überprüft, ob die auf dem gelesenen Datenträger des Geldsenders hinterlegte VIN mit der im zweiten Geldsender-Datensatz hinterlegten VIN übereinstimmt. Ist dies nicht der Fall, ist der Datenträger ungültig, und die Geldübertragung wird mit einem entsprechenden Signal an das Endgerät des Geldempfängers abgebrochen. Ist der Datenträger gültig, wird an die Prepaid-Shopping-Anwendung auf dem Server des Geldsenders eine Aufforderung zur Prüfung übermittelt, ob das elektronische Guthaben auf dem Prepaid-Konto des Geldsenders für die vorgesehene Geldübertragung ausreicht. Ist dies nicht der Fall, wird die Übertragung mit einem entsprechenden Hinweissignal an das Endgerät des Geldempfängers abgebrochen. Ist der zu übertragende Geldbetrag gedeckt, wird er auf dem Prepaid-Konto des Geldsenders reserviert.

Anschließend erfolgt die erwähnte Autorisierung per Eingabe der PIN durch den Geldsender am Lesegerät des Geldempfängers. Die eingegebene PIN wird mit der im zweiten Geldsender-Datensatz hinterlegten PIN verglichen. Ist sie gültig, wird der Abbuchungsvorgang eingeleitet. Ist sie ungültig, wird die Transaktion an dieser Stelle abgebrochen und wiederum ein entsprechendes Hinweissignal übermittelt.

Es folgt die Abbuchung des zu übertragenden Geldbetrages vom Prepaid-Konto des Geldsenders. Dieser Vorgang ist zeitkritisch und erfolgt in Echtzeit. Befindet sich das Prepaid-Konto des Geldsenders auf dem gleichen Server wie die Prepaid-Shopping-Applikation, kann das Guthaben sofort (in Echtzeit) um den zu übertragenden Geldbetrag reduziert werden. Befindet sich das Konto auf einem fremden Server, muß die Abbuchungsanforderung an die dortige Prepaid-Shopping-Anwendung gestellt werden, und die Abbuchung erfolgt unter deren Regime. In jedem Falle wird über den Abbuchungsvorgang ein Log-Record erstellt und der Geldempfänger über das Kassensystem oder einen Anruf oder per SMS o. ä. über die Ausführung der Abbuchung informiert.

Es folgt die Aufbuchung des zu übertragenden Geldbetrages auf das Konto des Geldempfängers, bei dem es sich um ein Prepaid-Konto, ein Realtime-Account oder ein normales Bank-Girokonto handeln kann. Dieser Vorgang ist nicht zeitkritisch, muß aber mit höchster Zuverlässigkeit erfolgen. Auch hierbei sind die oben für das Abbuchen erwähnten Varianten zu unterscheidenje nachdem, ob das Konto auf einem fremden Server geführt wird oder nicht. Auch für den Aufbuchungsvorgang wird ein Log-Record erstellt.

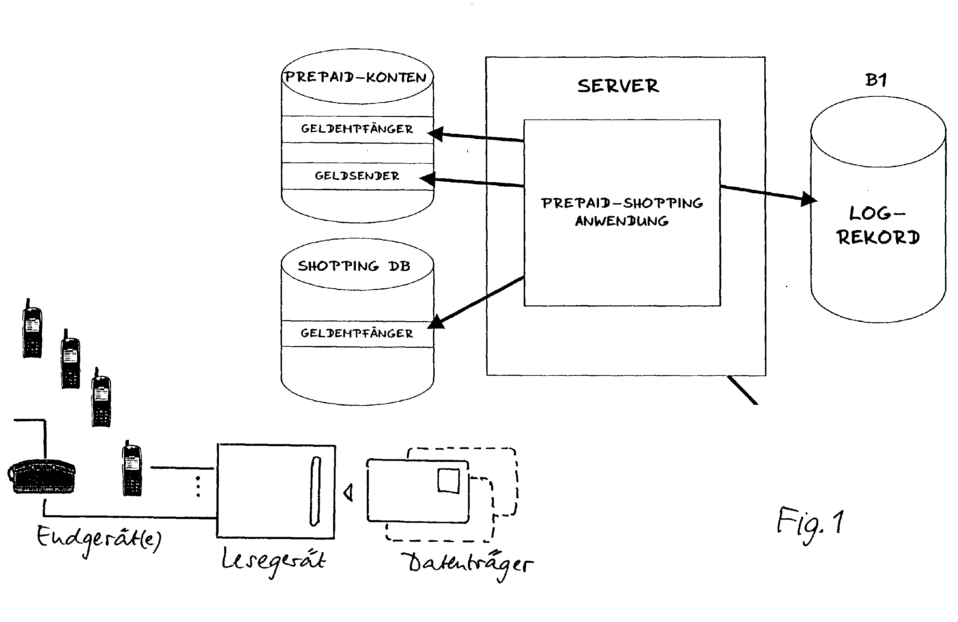

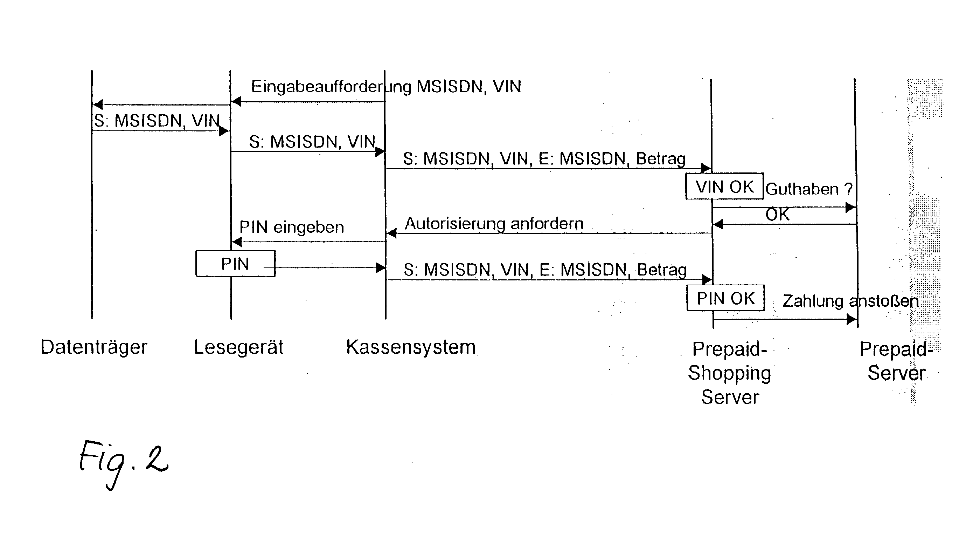

Es wird darauf hingewiesen, daß in Fig. 1 davon ausgegangen wird, daß die Prepaid-Shopping-Anwendung auf demselben Server läuft, auf dem auch Prepaid-Konten des Geldempfängers und Geldsenders geführt werden. In Fig. 2 ist dagegen vorausgesetzt, daß zumindest das Prepaid-Konto des Geldsenders auf einem anderen Server als demjenigen verwaltet wird, auf dem die Prepaid-Shopping-Anwendung läuft.

Die Ausführung der Erfindung ist nicht auf die erwähnten Beispiele, Varianten und Aspekte beschränkt, sondern im Rahmen der Ansprüche ebenso in einer Vielzahl von Abwandlungen möglich, die im Rahmen fachgemäßen Handelns liegen. Insbesondere sind die oben beschriebenen Verfahrensschritte auch in anderer Reihenfolge möglich.

## Patentansprüche

1. Verfahren zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein Telekommunikations- und Datennetz in Echtzeit, mit den Schritten:
- Speicherung eines ersten Geldsender-Datensatzes, der mindestens eine dem Geldsender-Guthabenspeicher zugeordnete Prepaid-Rufnummer im Telekommunikationsnetz umfaßt, auf einem Datenträger oder in einem Speicher eines Endgerätes,
- Speicherung eines zweiten Geldsender-Datensatzes, der mindestens die Prepaid-Rufnummer, einen Konto-Identifikator des Guthabenspeichers und einen Authentisierungsdatensatz umfaßt, in einer Transaktions-Datenbasis,
- Subskription eines Geldübertragungs-Dienstes durch den Geldempfänger bei einem Dienstbetreiber unter Speicherung eines Geldempfänger-Datensatzes, der mindestens einen Konto-Identifikator des Kontos bzw. Guthabenspeichers und eine Rufnummer eines Endgerätes des Geldempfängers im Telekommunikationsnetz umfaßt, in der Transaktions-Datenbasis,
- Lesen des ersten Geldsender-Datensatzes von dem Datenträger oder aus dem Endgerät mittels eines Lesegerätes mit einem zugeordneten Endgerät des Geldempfängers im Telekommunikationsnetz, wobei das Endgerät eine in dem Geldempfänger-Datensatz gespeicherte Rufnummer hat,
- Eingabe des zu übertragenden Geldbetrages am Lesegerät oder einem Zusatzgerät,
- Aufbau einer Verbindung zwischen dem Endgerät und einem Transaktions-Server des Dienstbetreibers, insbesondere aufgrund eines Teiles der Prepaid-Rufnummer,
- Übermittlung eines Geldübertragungs-Datensatzes, der mindestens den Geldbetrag, den Konto-Identifikator des Geldempfängers und die Prepaid-Rufnummer des Geldsenders umfaßt, an den Transaktions-Server,
- Auslesen aus der Transaktions-Datenbasis und Auswertung des Geldempfänger-Datensatzes und des zweiten Geldsender-Datensatzes durch den Transaktions-Server, einschließlich Herstellung optional erforderlichen Datenverbindung(en) zu einer oder mehreren externen Anwendung(en),
- Prüfung der Deckung des Geldbetrages im Geldsender-Guthabenspeicher und Reservierung des Geldbetrages im Deckungsfall bzw. Abbruch mit Signalisierung im Unterdeckungsfall,
- Abbuchung des Geldbetrages aus dem Geldsender-Guthabenspeicher und Dokumentation derselben,
- Aufbuchung des Geldbetrages auf das Geldempfänger-Konto bzw. den Geldempfänger-Guthabenspeicher und Dokumentation derselben,
- Übermittlung einer Information über die Ab- und/oder die Aufbuchung an das Endgerät des Geldempfängers.

2. Verfahren nach Anspruch 1,
**dadurch gekennzeichnet, daß**
der erste Geldsender-Datensatz einen Validierungscode umfaßt, der auch mindestens Teil des Authentisierungsdatensatzes im zweiten Geldsender-Datensatz ist, wobei die im zweiten Geldsender-Datensatz gespeicherte Fassung durch einen den Guthabenspeicher verwaltenden Dienstbetreiber zugreif- und änderbar ist.

3. Verfahren nach Anspruch 1 oder 2,
**dadurch gekennzeichnet, daß**
der Authentisierungsdatensatz im zweiten Geldsender-Datensatz einen Authentisierungscode und/oder biometrische Daten des Geldsenders umfaßt und vor dem Schritt der Abbuchung Schritte zur Autorisierung derselben ausgeführt werden, nämlich die Schritte:
- Eingabe des Authentisierungscodes bzw. der biometrischen Daten durch den Geldsender an einem Eingabegerät,
- Übermittlung derselben zum Transaktions-Server und
- Vergleich der übermittelten mit den im zweiten Geldsender-Datensatz vorliegenden Daten und Ausgabe eines Abbuchungs-Freigabesignals bei Übereinstimmung bzw. eines Abbuchungs-Sperrsignals bei Nichtübereinstimmung.

4. Verfahren nach Anspruch 3,
**dadurch gekennzeichnet, daß**
die Schritte zur Autorisierung bei einem einen vorbestimmten Schwellwert übersteigenden Geldbetrag ausgeführt werden, welcher insbesondere durch den Dienstbetreiber oder den Geldsender einstellbar ist.

5. Verfahren nach einem der vorangehenden Ansprüche,
**gekennzeichnet durch**
die Ausführung unter Herstellung einer Datenverbindung zu mindestens einem externen Server, auf dem der Geldsender-Guthabenspeicher und/oder das Geldempfänger-Konto bzw. der Geldempfänger-Guthabenspeicher verwaltet werden, wobei der Konto-Identifikator des Geldempfänger-Datensatzes und/oder der Konto-Identifikator des zweiten Geldsender-Datensatzes eine Serveradresse oder -rufnummer umfaßt und der Transaktions-Server sich mit dieser bzw. diesen nach dem Schritt des Auslesens des Geldempfänger-Datensatzes und des zweiten Geldsender-Datensatzes zur Ausführung der nachfolgenden Schritte verbindet.

6. Verfahren nach einem der vorangehenden Ansprüche,
**dadurch gekennzeichnet, daß**
die Eingabe des Geldbetrages über eine mit Lesegerät zusammenwirkende Kasse selbsttätig erfolgt.

7. Verfahren nach einem der vorangehenden Ansprüche,
**dadurch gekennzeichnet, daß**
das Lesen des ersten Geldsender-Datensatzes durch drahtlose Nachrichtenübertragung, insbesondere mittels Infrarot- oder Bluetooth-Übertragung, aus dem Endgerät des Geldsenders erfolgt.

8. Verfahren nach einem der vorangehenden Ansprüche,
**dadurch gekennzeichnet, daß**
die Subskription des Geldempfängers beim Dienstbetreiber mit einer Mehrzahl von Konten und/oder Rufnummern erfolgt, wobei insbesondere die Anzahl der Konten kleiner als die der Rufnummern ist, und wobei alle entsprechenden Konto-Identifikatoren und die Rufnummern im Geldempfänger-Datensatz gespeichert werden.

9. Anordnung zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein Telekommunikations- und Datennetz in Echtzeit, insbesondere zur Durchführung des Verfahrens nach einem der vorangehenden Ansprüche, welche aufweist:
- mindestens einen Kontoführungs-Server mit einem Geldsender-Guthabenspeicher und einem Geldempfänger-Konto- bzw. -Guthabenspeicher,
- einen Datenträger oder ein Endgerät des Geldsenders, in dem ein erster Geldsender-Datensatz gespeichert ist, welcher mindestens eine dem Geldsender-Guthabenspeicher zugeordnete Prepaid-Rufnummer in einem Telekommunikationsnetz umfaßt,
- ein an das Telekommunikations- und Datennetz angeschlossenes Endgerät des Geldempfängers, ein mit dem Endgerät des Geldempfängers verbundenes Lesegerät, welches zum Lesen des ersten Geldsender-Datensatzes aus dem Datenträger oder dem Endgerät des Geldsenders ausgebildet ist,
- eine Transaktions-Datenbasis eines Dienstbetreibers, in der ein Geldempfänger-Datensatz, der mindestens einen Konto-Identifikator des Kontos bzw. Guthabenspeichers und die Rufnummer des Endgerätes des Geldempfängers umfaßt, und ein zweiter Geldsender-Datensatz gespeichert sind, der mindestens die Prepaid-Rufnummer, einen Konto-Identifikator des Guthabenspeichers und einen Authentisierungsdatensatz umfaßt, und
- einen Transaktions-Server, der mit der Transaktions-Datenbasis verbunden und mit dem Endgerät des Geldempfängers sowie dem Kontoführungs-Server oder den Kontoführungs-Servern verbindbar oder mit letzterem bzw. letzteren integral ausgeführt ist, zum Auslesen des Geldempfänger-Datensatzes und des zweiten Geldsender-Datensatzes aus der Transaktions-Datenbasis und zum Empfang des ersten Geldsender-Datensatzes und zur Auswertung der Datensätze, einschließlich Herstellung optional erforderlicher Datenverbindung(en) zu einer oder mehreren externen Anwendung(en) und zur Steuerung einer Deckungsprüfung im Geldsender-Guthabenspeicher sowie einer Abbuchung von diesem und einer Aufbuchung auf das Geldempfänger-Konto bzw. den Geldempfänger-Guthabenspeicher.

10. Anordnung nach Anspruch 9,
**dadurch gekennzeichnet, daß**
die Transaktions-Datenbasis und der Geldsender-Guthabenspeicher und/oder der Geldempfänger-Guthabenspeicher auf dem Transaktions-Server implementiert sind.

11. Anordnung nach Anspruch 9 oder 10,
**dadurch gekennzeichnet, daß**
der Transaktions-Server Mittel zur Dokumentierung eines Abbuchungsvorganges und eines Aufbuchungsvorganges, insbesondere als Log-Record, aufweist.

12. Anordnung nach einem der Ansprüche 9 bis 11,
**dadurch gekennzeichnet, daß**
dem Transaktions-Server Telekommunikationsmittel zur Signalisierung eines Transaktionsabbruches oder einer Abbuchung und/ oder einer Aufbuchung mindestens an das Endgerät des Geldempfängers zugeordnet sind.

13. Anordnung nach einem der Ansprüche 9 bis 12,
**dadurch gekennzeichnet, daß**
das Telekommunikations- und Datennetz ein Mobilfunknetz umfaßt, wobei insbesondere das Endgerät des Geldempfängers und/ oder das Endgerät des Geldsenders als Mobilfunk-Endgerät ausgebildet ist.

14. Anordnung nach einem der Ansprüche 9 bis 13,
**dadurch gekennzeichnet, daß**
der Datenträger des Geldsenders als Chipkarte oder Magnetstreifenkarte und das Lesegerät des Geldempfängers als entsprechendes Kartenlesegerät ausgebildet sind.

15. Anordnung nach einem der Ansprüche 9 bis 14,
**dadurch gekennzeichnet, daß**
an das Lesegerät des Geldempfängers eine Kasse zur selbsttätigen Eingabe des Geldbetrages und/oder eine Eingabetastatur zur Eingabe eines Authentisierungscodes und wahlweise des Geldbetrages und/oder der Serveradresse oder Rufnummer des Transaktions-Servers angeschlossen ist.

16. Anordnung nach einem der Ansprüche 9 bis 13 oder 15,
**dadurch gekennzeichnet, daß**
das Lesegerät des Geldempfängers eine drahtlose Datenschnittstelle zum Auslesen des ersten Geldsender-Datensatzes aus dem Endgerät des Geldsenders an das Endgerät des Geldempfängers aufweist.

17. Anordnung nach einem der Ansprüche 9 bis 16,
**gekennzeichnet durch**
eine Mehrzahl von beim Dienstbetreiber registrierten Endgeräten des Geldempfängers, deren Rufnummern in dem Geldempfänger-Datensatz gespeichert sind.

18. Anordnung nach einem der Ansprüche 9 bis 17,
**gekennzeichnet durch**
eine Mehrzahl von Datenträgern oder Endgeräten des Geldsenders, in denen jeweils ein gültiger erster Geldsender-Datensatz gespeichert ist.
